# EUROPEAN PATENT SPECIFICATION

(11) **EP 1 337 374 B1**
(45) Date of publication and mention of the grant of the patent: **29.08.2007**
(21) Application number: 01993383.7
(22) Date of filing: 02.11.2001
(51) Int. Cl.: B23K 1/19, B23K 35/00

(54) **METHOD OF MANUFACTURING AN ASSEMBLY OF BRAZED DISSIMILAR METAL COMPONENTS**
HERSTELLUNGS VERFAHREN EINER BAUGRUPPE DURCH HARTLÖTEN VON AUS UNTERSCHIEDLICHENMETALLEN BESTEHENDEN ELEMENTEN
PROCEDE DE FABRICATION D'UN ASSEMBLAGE DE COMPOSANTS DE METAL HETEROGENE BRASE

(30) Priority: 07.11.2000 EP 00203883
(43) Date of publication of application: 27.08.2003
(73) Proprietor: Aleris Aluminum Koblenz GmbH, 56070 Koblenz (DE)
(72) Inventor: WITTEBROOD, Adrianus, Jacobus, NL-1991 HB Velserbroek (NL); WIJENBERG, Jacques, Hubert, Olga, Joseph, NL-1019 PE Amsterdam (NL)
(74) Representative: Müller, Frank Peter
(86) International application number: PCT/EP2001/012769
(87) International publication number: WO 2002/038321

(56) References cited:
- WO-A-01/88226
- GB-A- 1 176 688
- US-A- 4 028 200
- US-A- 4 602 731
- PATENT ABSTRACTS OF JAPAN vol. 005, no. 203 (M-103), 23 December 1981 (1981-12-23) & JP 56 119683 A (HITACHI LTD), 19 September 1981 (1981-09-19)

## Description

### FIELD OF THE INVENTION

The invention relates to a method of manufacturing an assembly of components joined by brazing, comprising the steps of forming said components of which at least two components are dissimilar to each other, assembling the components into an assembly, brazing the assembly, and cooling the brazed assembly.

A prior art method is described in US-A-4 028 200.

### DESCRIPTION OF THE RELATED ART

For the purpose of this invention multi-layered brazing sheet product is to be understood as a core alloy on at least one side coupled to a clad aluminium alloy. Typical clad aluminium alloys are those of the Aluminium Association (AA)4000-series alloys and having a Si content in the range of 2 to 18% by weight, and more preferably 5 to 14% by weight. The clad aluminium alloys may be coupled to the core alloy in various ways known in the art, for example by means of roll bonding, cladding or semi-continuous or continuous casting.

Electrochemical fuel cells convert a fuel and an oxidant into electricity, water and heat. Proton Exchange Membrane Fuel Cells ("PEMFC") generally employ a membrane electrode assembly ("MEA") which comprises an ion exchange membrane or solid electrolyte disposed between two electrodes formed of porous, electrically conductive sheet material. These types of fuel cell are showing great promise for use in automotive applications as well as so-called stationary applications. There are various requirements for the metals used in a fuel cell, such as good resistance to corrosion, high strength and low manufacturing costs. Furthermore, there is a requirement of good formability. For example by means of bending, to allow for the design and manufacturing of complex shaped components. Similar requirements apply for heat-exchanger devices. As a result of these requirements various dissimilar metals may be employed in manufacturing electrochemical fuel cells. These dissimilar metals or metal alloys need to be bonded to each other in such a manner that a strong and reliable bond is obtained. A suitable method of bonding metals to each other may be brazing processes.

Brazing, by definition, employs filler metal having a liquidus temperature above 450°C and below the solidus temperature of the base metal. Brazing is distinguished from soldering by the melting point of the filler metal: solders melt below 450°C.

Controlled Atmosphere Brazing ("CAB") and Vacuum Brazing ("VB") are the two main processes used for industrial scale brazing. VB is essentially a discontinuous process and puts high demands on material cleanliness. Traditional CAB requires an additional process step prior to brazing as compared to VB, namely a brazing flux has to be applied prior to brazing. CAB is essentially a continuous process where if the proper brazing flux is being used high volumes of brazed assemblies can be produced. To obtain good brazing results the brazing flux has to be applied on the total surface of the assembly. This can cause difficulties with traditional powder or wet fluxes, like Nocolok (trade mark) brazing flux, and certain type of assemblies because of their design. During the brazing cycle, corrosive fumes such as HF are generated. This puts a high demand on the corrosion resistance of the materials applied for the furnace.

Ideally, a material should be available that can be used for CAB but does not have the requirements and defects of the brazing flux application. Such a material can be supplied to a manufacturer of brazed assemblies and is ready to use directly after forming of the assembly parts. No additional brazing fluxing operations have to be carried out. Presently, only one process for fluxless brazing is used on an industrial scale. The material for this process can be for example standard brazing sheet made from an AA3000-series core alloy clad on both sides with a cladding of an AA4000-series alloy. Before the brazing sheet can be used the surface has to be modified in such a way that the naturally occurring oxide layer does not interfere during the brazing cycle. The method of achieving good brazing is to deposit a specific amount of nickel on the surface of the clad alloy. If properly applied, the nickel reacts, presumably exothermically, with the underlying aluminium. The nickel can be applied by using a shim of nickel between the two parts to be joined or can be deposited by electroplating. When electroplating is used the adherence of the nickel should be sufficient to withstand typical shaping operations being used in for example heat exchanger manufacture.

The processes for nickel-plating in an alkaline solution of aluminium brazing sheet are known from each of US-3,970,237, US-4,028,200, US-4,164,454, and SAE-paper no. 880446 by B.E. Cheadle and K.F. Dockus. According to these documents, nickel or cobalt, or combinations thereof, are most preferably deposited in combination with lead. The lead addition is used to improve the wettability of the clad alloy during the brazing cycle. An important characteristic of these plating processes is that the nickel is preferentially deposited on the silicon particles of the clad alloy. To obtain sufficient nickel for brazing on the surface, the clad alloy should contain a relatively large number of silicon particles to act as nuclei for the nickel deposition. It is believed that to obtain sufficient nucleation sites before pickling a part of the aluminium in which the silicon particles are embedded should be removed by chemical and/or mechanical pre-treatment. This is believed a necessary condition to obtain a sufficient nickel coverage to serve as nuclei for the plating action of the brazing or clad alloy. On a microscopic scale the surface of the Si-containing cladding of the brazing sheet is covered with nickel globules.

However, the use of lead for manufacturing brazed assemblies and used in various market areas is undesirable, and it is envisaged that in the near future there might possibly even be a ban on lead comprising products or products manufactured via one or more intermediate processing steps comprising lead or lead-based components.

### SUMMARY OF THE INVENTION

An object of the invention is to provide a method of manufacturing an assembly of dissimilar metal components joined by brazing, and comprising the steps of forming said components of which at least two components are dissimilar to each other and at least one of which is a multi-layered brazing sheet product, assembling the components into an assembly, brazing the assembly, and cooling the brazed assembly.

A further object of the invention is to provide a method of manufacturing an assembly of dissimilar components joined by brazing, and comprising the steps of forming said,components of which at least two components are dissimilar to each other, assembling the dissimilar components into an assembly, brazing the assembly, and cooling the brazed assembly, and wherein one of the components is multi-layered brazing sheet which has improved formability characteristics.

A further object of the present invention is to provide a method of manufacturing an assembly of dissimilar metal components joined by brazing, where the components of at least the multi-layered brazing sheet product are lead-free.

In accordance with the invention in one aspect there is provided a method of manufacturing an assembly of components joined by brazing, comprising the steps of:-
(i) forming said components of which at least one is made from a multi-layered brazing sheet product, said multi-layered brazing sheet product comprising a core sheet (a) having on at least one surface of said core sheet an aluminium clad layer (b), the aluminium clad layer being made of an aluminium alloy comprising silicon in an amount in the range of 2 to 18% by weight, preferably in the range of 5 to 14% by weight, a layer (c) comprising nickel on the outer surface of said aluminium clad layer, and a layer (d) comprising zinc or tin as a bonding layer between said outer surface of said aluminium clad layer and said layer comprising nickel;
(ii) forming at least one other component of a metal dissimilar to the core sheet of the multi-layered brazing sheet product and selected from the group consisting of titanium, plated titanium, coated titanium, bronze, brass, stainless steel, plated stainless steel, coated stainless steel, nickel, nickel alloy, low-carbon steel, plated low-carbon steel, coated low-carbon steel, high-strength steel, coated high-strength steel, and plated high-strength steel;
(iii) assembling the respective components into an assembly such that the layer (c) comprising nickel of the multi-layered brazing sheet product faces in part or in whole the at least one other component of a metal dissimilar to the core sheet of the multi-layered brazing sheet product;
(iv) brazing the assembly under a vacuum or in an inert atmosphere in the absence of a brazing-flux at elevated temperature for a period long enough for melting and spreading of the aluminium clad layer and all layers exterior thereto;
(v) cooling the brazed assembly. The cooling rate may be in the range of typical brazing furnace cooling rates. Typical cooling rates are cooling rates of at least 10°C/min or more, and preferably of 40°C/min or more.

By using the novel and improved defined multi-layer brazing sheet product an effective bond between the aluminium clad layer and the layer comprising nickel is formed, the bond remaining effective during subsequent deformation of the multi-layer brazing sheet. The component may be made out of a sheet or strip by stamping or other process steps typically used to prepare or assemble complex structure such as cans, prismatic can, containers, cells, or other parts typically used to design and manufacture for example heat exchangers or fuel cells. The improved capability for deforming allows for the design of more complex designed assemblies joined by brazing. Furthermore, manufacturing of the multi-layer brazing sheet product may be carried out in a continuous process. The product is ideally suitable for fluxless brazing under controlled atmosphere conditions to produce assemblies of dissimilar metal components.

The method allows for the design and manufacture of brazed assemblies in which, for example a component being made of titanium or plated or coated titanium, e.g. copper-plated titanium, is bonded by means of brazing to one side of the multi-layered brazing sheet component having on both sides a layer (d) comprising nickel, which layer may be kept essentially lead-free, and whereby on the other side of said multi-layered brazing sheet a component being made of plated or coated stainless steel or aluminium is bonded by means of brazing. The bonding achieved by means of brazing is reliable and has sufficient strength.

The invention is based in part on the insight that to obtain a well-bonded nickel layer on the Si-containing clad layer of the brazing sheet product so that the bond remains effective under large deformation, pre-treatment of the clad layer is extremely important. The prior art processes apparently aimed at applying the nickel in a distributed form, principally on the silicon particles at the surface of the clad layer, rather than trying to achieve a uniform nickel layer. In the present invention the surface of the Si-containing clad alloy is altered in such way that the nickel coverage is independent of the silicon particles at its surface. The nickel plating does not take place on the silicon particles but on the applied layer comprising zinc or tin. Since the nickel thus is deposited on the total surface of the clad layer the necessary reaction before brazing can take place much more easily as compared to the process of the prior art. The zinc or tin applied does not interfere at all during the brazing process, and may contain a component to assist the brazing, as described below. Since the nickel is deposited smoothly and uniformly on the surface, the use of lead to promote wetting during brazing can be reduced or avoided, or other elements such as bismuth may be used for this purpose. A further important advantage of the nickel deposited smoothly and uniformly on the surface is that the total amount of nickel to be applied in order to achieve good flux-less brazing can be reduced. Another advantage is that the complete surface coverage avoids any difficulty caused by aluminium oxide at the surface of the clad layer.

Preferably said aluminium clad layer has discrete silicon-rich particles exposed at said outer surface thereof, and said layer comprising nickel is bonded to said silicon-rich particles and to the areas of said outer surface between said silicon-rich particles, so as to form a continuous layer on said outer surface.

In dependence on the composition of the core sheet the process may further include the further processing step of ageing at ambient or elevated temperature of the brazed and cooled assembly in order to optimise the mechanical and/or corrosion properties of the resultant assembly.

Very good results may be obtained with a direct zinc-plating treatment. Alternatively very good results may be obtained with an immersion zincate treatment or immersion stannate treatment, often also referred to as displacement plating. A further advantage is that this treatment lends itself to application in a continuous process operation. Preferably the duration of the zincate treatment or stannate treatment is in the range of 1 to 300 seconds. Preferably the temperature of the bath during the zincate treatment or stannate treatment is in the range of 10 to 50°C, and more preferably in the range of 15 to 30°C.

In an embodiment of the method according to the invention in the multi-layer brazing sheet the applied layer (d) comprising zinc or tin has a thickness up to 0.5µm, more preferably up to 0.3µm (300nm), and most preferably in the range of 0.01 to 0.15µm (10-150nm). In the best results obtained a thickness of about 30nm has been used. A coating thickness of greater than 0.5µm requires a prolonged treatment time, e.g. for displacement plating, and is thought to have no further advantages for improving the adhesion.

The zinc or tin layer applied in the multi-layer brazing sheet product used in the method according to this invention may be essentially a pure zinc or tin layer or may be primarily zinc or tin (e.g. at least 50 weight %). Deliberately added elements may be present, such as for example bismuth in a range of up to 10% to improve the wetteability action during subsequent brazing operations. Typically impurity elements are present at less than 5% by weight in the zinc or tin layer.

In accordance with the invention in another aspect there is provided a method of manufacturing an assembly of brazed components, comprising the steps of:-
(i) forming said components of which at least one is made from a multi-layered brazing sheet product, said multi-layered brazing sheet product comprising a core sheet (a) having on at least one surface of said core sheet an aluminium clad layer (b), the aluminium clad layer being made of an aluminium alloy comprising silicon in an amount in the range of 2 to 18% by weight, preferably in the range of 5 to 14% by weight, and a layer (c) on the outer surface of said aluminium clad layer, the layer (c) comprising nickel and further at least bismuth in a range of up to 5% by weight, and whereby the multi-layered brazing sheet product is devoid of a bonding layer of zinc or tin between the aluminium clad layer and the layer comprising nickel;
(ii) forming at least one other component of a metal dissimilar to the core sheet of the multi-layered brazing sheet product and selected from the group consisting of plated titanium, coated titanium, bronze, brass, plated stainless steel, coated stainless steel, low-carbon steel, plated low-carbon steel, coated low-carbon steel, high-strength steel, coated high-strength steel, and plated high-strength steel;
(iii) assembling the respective components into an assembly such that the layer (c) comprising nickel of the multi-layered brazing sheet product faces in part or in whole the at least one other component of a metal dissimilar to the core sheet of the multi-layered brazing sheet product;
(iv) brazing the assembly under a vacuum or in an inert atmosphere in the absence of a brazing-flux at elevated temperature for a period long enough for melting and spreading of the aluminium clad layer and all layers exterior thereto;
(v) cooling the brazed assembly. The cooling rate may be in the range of typical brazing furnace cooling rates. Typical cooling rates are cooling rates of at least 10°C/min or more, and preferably of 40°C/min or more.

In accordance with the invention it has been found surprisingly that the nickel layer does not need to comprise any lead as a mandatory alloying addition in order to achieve good brazeability of this dissimilar metal components. Surprisingly it has been found that equal or even better results can be obtained if bismuth is added to the nickel layer, such that said nickel layer can be kept lead-free. If the nickel layer is applied by plating also the plating bath used for the deposition of this Ni-Bi layer can be kept free from any lead-containing components. By using this aqueous plating bath the need for the addition of lead has been overcome, which is a significant achievement from an environmental point of view.

The method allows for the design and manufacture of brazed assemblies in which, for example a component being made of titanium or plated or coated titanium, e.g. copper-plated titanium, is joined by means of brazing to one side of the multi-layered brazing sheet product component comprising on both sides a layer (c) comprising nickel, which layer may be kept essentially lead-free, and whereby on the other side of said multi-layered brazing sheet a component being made of plated or coated stainless steel or aluminium is joined by means of brazing. The joining achieved by means of brazing is reliable and has sufficient strength.

In an embodiment of the methods according to the invention is characterised in that said layer (c) comprising nickel, further at least comprises bismuth in a range of up to 3% by weight, preferably up to 1% by weight, and more preferably in a range of 0.01 to 0.05 % by weight.

In an embodiment of the methods according to this invention in the multi-layer brazing sheet product used in the method according to this invention the layer comprising nickel has a thickness up to 2.0µm, preferably up to 1.0µm, and more preferably up to 0.5µm. A coating thickness of greater than 2.0µm requires a prolonged treatment time for plating, and may result in wrinkling of the molten filler material during brazing. A preferred minimum thickness for this Ni-containing layer is 0.3µm. However, other techniques such as thermal spraying, plasma spraying, Chemical Vapour Deposition ("CVD") and Physical Vapour Deposition ("PVD") or other known techniques for depositing of metals or metal alloys from a gas or vapour phase may be used.

In an embodiment of the methods according to the invention of the multi-layer brazing sheet product said layer (c) comprising nickel is deposited by electroplating both nickel and bismuth using a lead-free aqueous bath comprising a nickel-ion concentration in the range of 10 to 100 g/l and a bismuth-ion concentration in the range of 0.01 to 10 g/l. It has been found that both nickel and bismuth may be electroplated simultaneously from one bath, allowing for an economical production of multi-layer brazing sheet product which can withstand high degrees of forming.

In a further embodiment the methods according to the invention is characterised in that of the multi-layered brazing sheet product said layer comprising nickel is being deposited by plating both nickel and bismuth using a lead-free aqueous bath comprising a nickel-ion concentration in a range of 20 to 70 g/l and a bismuth-ion concentration in the range of 0.02 to 5 g/l.

The nickel-ion concentration to the aqueous bath can be added via the addition of nickel chloride, nickel fluoborate, nickel sulfamate, nickel acetate or nickel sulphate. However, there is a preference to use the addition of nickel sulphate (NiSO₄). At a too high level of nickel salt in the aqueous bath there is the risk of the crystallisation of the salt in the solution, which might damage a continuous process. At too low levels the resultant bath becomes uneconomical due to too long plating times and low current density.

The aluminium clad layer may be coupled to the core sheet of the multi-layered brazing sheet by means of roll bonding, spray forming, semi-continuous casting or continuous casting processes.

In an embodiment of the methods according to the invention the aluminium clad layer (c) is of an AA4000-series aluminium alloy comprises Si in a range of 2 to 18% by weight, and preferably 5 to 14%, and further at least Mg in a range of up to 8% by weight, and preferably up to 5% by weight, and more preferably in a range of 0.05 to 2.5% by weight.

In a further embodiment of the methods according to this invention the aluminium clad layer (c) comprises, in weight percent:-

| | |
|---|---|
| Si | 2 to 18, preferably 5 to 14 |
| Mg | up to 8.0, preferably up to 5.0 |
| Zn | up to 5.0 |
| Cu | up to 5.0 |
| Mn | up to 0.50 |
| In | up to 0.30 |
| Fe | up to 0.8 |
| Sr | up to 0.20 |

and at least one element selected from the group consisting of:-

| | |
|---|---|
| Bi | 0.01 to 1.0 |
| Li | 0.01 to 1.0 |
| Sb | 0.01 to 1.0 |

impurities each up to 0.05, total up to 0.20
balance aluminium.
This aspect of the invention is based on the insight that the aluminium clad layer may comprise one or more elements selected from the group consisting of bismuth, lead, lithium and antimony, each in a range of 0.01 to 1.0%, and magnesium in a range of 0.2 to 2.0%, and the combination of two or more elements does preferably not exceed 2.5%. In accordance with the invention it has been found surprisingly that the nickel layer itself does not need to comprise any lead as a mandatory alloying addition. Surprisingly it has been found that an equal or even better results can be obtained if one or more elements of the group Bi, Li, Sb and Mg is being added in the given ranges to the aluminium clad layer itself. The addition of lead to the aluminium clad layer is very effective, however, its addition from an environmentally point of point is to be avoided. Further alloying elements may be added to improve specific properties of the aluminium alloy clad layer. Magnesium may be present in the clad layer in a range of up to 8.0%, and preferably in a range of 0.2 to 5.0%, and more preferably 0.5 to 2.5%, as an alloying element to increase amongst others the strength of the aluminium clad layer. In accordance with the invention it has been found also that magnesium in the range of 0.2 to 2.0% may also act in a similar way as elements selected from the group of bismuth, lithium and antimony. Preferably the magnesium level in the aluminium clad layer does not exceed 2.0%, when it is present essentially only to promote the wetting action of the aluminium clad alloy in combination with the lead-free nickel layer. In case magnesium in the clad layer is present in an amount of more than 2.0% it is preferably accompanied with one or more elements selected from the group consisting of bismuth, lithium and antimony in the given ranges, and whereby the combination of two or more elements from this group does preferably not exceed 1.0%. It has been found also that in use of the multi-layer brazing sheet the presence of magnesium in the aluminium clad layer has no detrimental effects during brazing. This is a major improvement over known multi-layered brazing sheet products. It allows that Mg-containing multi-layered brazing sheet products may be applied in both VB and fluxless CAB. The latter possibility has many economical and technical advantages.

The core sheet may be coupled to the aluminium clad layer via one or more intermediate layer or layers, which may be another aluminium alloy, copper or copper alloy, zinc or zinc alloy.

The core sheet of the brazing sheet product on which multiple metal layers are being coupled are preferably of aluminium alloys, for example of the Aluminium Association (AA)3000, (AA)6000 or (AA)5000-series, but may also be titanium, bronze, brass, copper, high-strength steel, low-carbon steel or stainless steel. Stainless steel grades with 0.01 to 0.35 % by weight of carbon and 11 to 27% by weight of Cr, as defined by the international steel numbers, like Ferritic grades, for example ASTM 409, 410S, 430; Martensitic grades, for example ASTM 420; Duplex grades, for example ASTM 329, S31803; Austenitic grades, for example ASTM 301, 304L, 321, 316L; heat and creep resisting grades, for example ASTM 309S, 304H. High-strength steel with yield strengths in the range of 550 to1100 MPa, tensile strength in the range of 585 to 1170 MPa, and an elongation in the range of 1 to 8%. This clarification of suitable non-aluminium materials applies also for the choice set forth in the claims and the description for the at least one other component of a metal dissimilar to the core sheet of the multi-layered brazing sheet product.

The core sheet has a thickness typically in a range of up to 5 mm, more preferably in the range of 0.2 to 2 mm.

The invention further provides an assembly joined by brazing and manufactured in accordance with the invention described above. In its preferred embodiments the brazed assembly is a heat-exchanger, typically for automotive applications, or a fuel-cell, ideally a proton exchange membrane fuel cell.

In a further aspect of the invention there is provided in a method of use of the multi-layered brazing sheet set out above and set forth in the claims in a method of manufacturing an assembly joined by brazing, preferably in an inert atmosphere brazing (CAB) process in the absence of a brazing-flux material.

### BRIEF DESCRIPTION OF THE DRAWINGS

The invention will now be illustrated by several non-limitative examples, and with reference to the drawings, wherein:
Fig. 1 is a schematic longitudinal section showing the structure of brazing sheet product according to the state of the art;
Fig. 2 is a schematic longitudinal section showing the structure of aluminium brazing sheet product according to the invention.

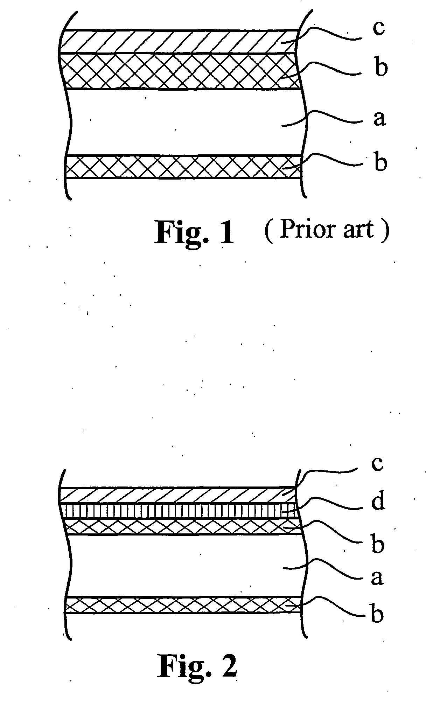

Fig. 1 shows schematically a brazing sheet product in accordance with the prior art as would be obtained by the process in accordance with for example US-3,970,237. The brazing sheet product consists of a core sheet (a) on one or both sides clad with an aluminium clad layer (b) comprising an Al-Si alloy. On top of the clad layer a thin nickel-lead layer (c) is applied by means of electroplating.

Fig. 2 shows schematically a brazing sheet product used in accordance with the invention for manufacturing an assembly of components joined by brazing, whereby at least two components are dissimilar to each other. The brazing sheet product comprises a core sheet (a) on one or both sides clad with an aluminium alloy clad layer (b) comprising silicon in an amount of 2 to 18% by weight, and typically a AA4000-series aluminium alloy, a layer (c) comprising nickel or nickel-bismuth on the outer surface of the aluminium clad layer (b), and a bonding layer (d) comprising zinc or tin between the layers (b) and (c). In Fig. 2 the layers (c) and (d) have been shown on only one side of the brazing sheet product, but it will be immediately apparent to the skilled person that they may also be applied on both sides of the brazing sheet product. Furthermore it will be immediately apparent to the skilled person that on top of the layer (c) comprising nickel or nickel-bismuth further metal layers may be applied to improve on other characteristics of the brazing sheet product, such as, but not limited thereto, improvement of corrosion characteristics. The composition and the thickness of the various layers and their advantages have been set out above.

### EXAMPLES

### Example 1.

On a laboratory scale tests have been carried out on aluminium brazing sheet product manufactured from an AA3003-series aluminium core alloy roll clad on both sides with an AA4045-series aluminium clad alloy. The product had a total thickness of 0.5 mm, and the thickness of each clad being 10.9% of the total thickness. The composition, in weight percent, of these alloys is given in Table 1.

**Table 1.**

| | **AA 3003** | **AA 4045** |
|---|---|---|
| Si | 0.6 max. | 9.0 - 11.0 |
| Fe | 0.7 max. | 0.8 max. |
| Cu | 0.05 - 0.20 | 0.30 max. |
| Mn | 1.0 - 1.5 | 0.05 max. |
| Mg | - | 0.05 max. |
| Zn | 0.10 max. | 0.10 max. |
| Ti | - | 0.20 max. |
| impurities | each 0.05 | each 0.05 |
| | total 0.15 | total 0.15 |
| balance | aluminium | aluminium |

Each sample was treated by the following sequential process steps (see also Table 2),
- cleaning by immersion for 180 sec. in ChemTec (trade name) 30014 (a commercial alkaline (etch) degreaser), and rinsing,
- alkaline etching for 20 sec. in ChemTec (trade name) 30203 (a commercial available alkaline etch cleaner), and rinsing,
- optionally desmutting for 4 sec. in an acidic oxidising solution, typically 25-50 vol.% nitric acid, comprising ChemTec (trade name) 11093 (a commercial available pickle activator) at ambient temperature, followed by rinsing,
- optionally zincate immersion using ChemTec (trade name) 024202 for 12 sec. at room temperature, followed by rinsing,
- nickel electroplating, and rinsing.

For the nickel electroplating two different types of solutions were used, a basic bath and an acid bath, see also Table 2.

The acid bath comprised 270 g/l nickel sulphate, 50 g/l nickel chloride, 30 g/l boric acid. The plating conditions at 50°C were such that a nickel layer of 2.0µm is present after the plating process using a current density of 5 A/dm². This acid bath is also known as the Watt's process.

The basic bath comprised 50 g/l nickel sulphate, 50 g/l nickel chloride, 100 g/l sodium citrate, 1 g/l lead acetate, and 75 ml/l ammonium hydroxide (30%). The plating conditions at 26°C were such that a plating time of 50 s resulted in a nickel-lead plated layer of 0.5µm thickness using a current density of 3 A/dm², and a plating time of 200 s resulted in a nickel-lead plated layer of 2.0µm thickness.

The multi-layered brazing sheet specimens have been tested for adhesion using the Erichsen dome test (5 mm), and the T-bend test. A value assessment is then given to the adhesion where: (-) = poor, (±) = fair, and (+) = good. The morphology of the nickel layer applied has been investigated using SEM/EDX, where: U = uniform nickel layer (shiny appearance), and (G) = nickel globules preferentially deposited on the silicon particles (dull appearance).

Furthermore, the brazeability has been assessed. On a laboratory scale of testing the brazing tests were carried out in a small quartz furnace. Small coupons of 25 x 25 mm were cut from the multi-layered brazing sheets. A small strip of an AA3003 alloy measuring 30 x 7 x 1 mm was bent in the centre to an angle of 45° and laid on the coupons. The strip-on-the-coupon samples were heated under flowing nitrogen, with heating from room temperature to 580°C, dwell time at 580°C for 1 minute, cooling from 580°C to room temperature. The brazing process was judged on possible formation of wrinkles, capillary depression and fillet formation. An overall assessment was given where: (-) = poor brazeability, (-/±) = fair brazeability, (±) = good brazeability, and (+) = excellent brazeability. The results obtained are summarised in Table 2.

From the results of Table 2 it can been seen that in case of a zinc immersion pre-treatment step, a uniform nickel or nickel-lead layer is obtained having a shiny appearance. Further it can be seen that a zinc immersion pre-treatment is required to obtain a good adhesion of the electroplated nickel layer allowing to prepare or assemble complex structure such as cans, prismatic can, containers, cells, or other parts typically used to design and manufacture for example heat exchangers or fuel cells. Further it can be seen that a nickel-lead layer of 0.5µm has better brazeability characteristics than a layer of 2.0µm thickness; in the latter case wrinkles have been observed. The brazeability of the material obtained via the basic bath route has better brazeability characteristics (but still acceptable) than material obtained via the acid bath route, possibly due to the presence of lead in the electroplated layer.

In addition, the brazeability has been assessed by bringing multi-layered brazing sheet products into contact with strips of the following dissimilar metals: copper plated stainless steel (AA304 grade), copper plated low-carbon steel (0.15 max. weight.% C, and 1.65 max. weight.% Mn), brass (70% copper, 30% zinc), 100% copper sheet and titanium 5.4 1. On a laboratory scale the brazing tests were carried out in a small quartz furnace. Small coupons of 25x25 mm were cut from multi-layered aluminium brazing sheet product obtained via a process comprising the zincate immersion treatment set out above and the nickel layer obtained via the basic bath comprised 50 g/l nickel sulphate, 50 g/l nickel chloride, 100 g/l sodium citrate, 1 g/l lead acetate, and 75 ml/l ammonium hydroxide (30%), and the plating conditions at 26°C were such that a plating time of 50 sec. resulted in a nickel-lead plated layer of 0.5µm thickness using a current density of 3 A/dm². A small strip of the dissimilar metal sheet measuring 30 x 7 x 1 mm was bent in the centre to an angle of 45° and laid on the coupons. No external force was used. The dissimilar metal strip on the coupon samples were heated under flowing nitrogen, with heating from room temperature to 580°C, dwell time at 580°C for 1 minute, cooling from 580°C to room temperature. Joining was considered to have taken place when a fillet was formed between the aluminium alloy and the dissimilar metal to be joint. In all of the described examples a fillet was formed indicating a positive wetting action of the molten aluminium clad alloy and the nickel comprising layer during the braze cycle.

For comparison multi-layered brazing sheets having no layer comprising nickel have been brought into contact with strips of the following dissimilar metals: copper plated stainless steel (AA304 grade), copper plated low-carbon steel (0.15 max. weight.% C, and 1.65 max. weight.% Mn), brass (70% copper, 30% zinc), 100% copper sheet and titanium 5.4 1., and subjected to the same brazing cycle as set out above. The brazed samples showed little or none wetting with the metals to be joint by brazing.

**Table 2. Experimental conditions and results.**

| **Plating bath** | acid | acid | acid | basic | basic | basic | basic |
|---|---|---|---|---|---|---|---|
| **Desmutting [s]** | 4 | 4 | - | 4 | - | 4 | - |
| **Zinc immersion time [s]** | - | 12 | 12 | - | 12 | 12 | 12 |
| **Nickel plating time [s]** | 120 | 120 | 120 | 200 | 200 | 50 | 50 |
| **Adhesion** | - | + | + | - | + | + | + |
| **Brazeability** | -/± | -/± | -/± | ± | ± | + | + |
| **Morphology** | G | U | U | G | U | U | U |

### Example 2.

Analogue to Example 1 multi-layered brazing sheet products have been prepared and subsequently brazed to: copper plated stainless steel (AA304 grade), copper plated low-carbon steel (0.15 max. weight.% C, and 1.65 max. weight.% Mn), brass (70% copper, 30% zinc), 100% copper sheet and titanium 5.4 1. However, the nickel comprising layer has been applied using a different manner, namely by using a nickel plating bath having a composition as set out in Table 3 and having a pH of 5.5. The Bi-ion concentration has been added to the plating bath using a Bi-ion concentrate of 160 g/l sodium hydroxide, 300 g/l sodium gluconate and 111 g/l bismuth oxide. The bismuth oxide could have been replaced also by bismuth carbonate. The electroplating of a Ni-Bi layer was performed at 57°C using a current density of 6 A/dm² and a plating time of 25 sec. About 10 g/m² of nickel was deposited and about 0.5 g/m² bismuth, being the sum of the applied layers on both sides on the brazing sheet product. The bismuth content of the deposited alloy layer can easily be varied, e.g. by lowering the bismuth concentration in the plating bath, to give a lower Bi content.

Also in this experiment a fillet was formed in all examples indicating a positive wetting action of the molten aluminium clad alloy and all layers exterior thereto during the braze cycle. Furthermore, this example shows how an electroplated nickel layer containing bismuth, but comprising no lead, may be applied, resulting in a product having a good adhesion of the nickel layer and excellent brazeability for the dissimilar metal components.

**Table 3.**

| **Compound** | **Concentration [g/l]** |
|---|---|
| Nickel sulphate | 142 |
| Ammonium sulphate | 34 |
| Nickel chloride | 30 |
| Sodium citrate | 140 |
| Sodium gluconate | 30 |
| Bismuth ions | 1 |

This lead-free plating bath has many advantages compared to the standard known lead-containing baths: no ammonia fumes, more practical operating temperatures, typically 40 to 70°C, high current density, bismuth can easily be replenished to the plating bath., and further, standard chemicals can be employed.

Having now described the invention, it will be apparent to one of ordinary skill in the art that many changes and modifications can be made without departing from the scope of the invention as defined by the claims.

## Claims

1. Method of manufacturing an assembly of components joined by brazing, comprising the steps of:-
(i) forming said components of which at least one is made from a multi-layered brazing sheet product, the multi-layered brazing sheet product comprising a core sheet (a) having on at least one surface of said core sheet an aluminium clad layer (b), the aluminium clad layer being made of an aluminium alloy comprising silicon in an amount in the range of 2 to 18% by weight, a layer (c) comprising nickel on the outer surface of said aluminium clad layer, and a layer (d) comprising zinc or tin as a bonding layer between said outer surface of said aluminium clad layer and said layer comprising nickel;
(ii) forming at least one other component of a metal dissimilar to the core sheet of the multi-layered brazing sheet product and selected from the group consisting of titanium, plated titanium, coated titanium, bronze, brass, stainless steel, plated stainless steel, coated stainless steel, nickel, nickel alloy, low-carbon steel, plated low-carbon steel, coated low-carbon steel, high-strength steel, coated high-strength steel, and plated high-strength steel;
(iii) assembling the respective components into an assembly such that the layer (c) comprising nickel of the multi-layered brazing sheet product faces in part or in whole the at least one other component of a metal dissimilar to the core sheet of the multi-layered brazing sheet product;
(iv) brazing the assembly under a vacuum or in an inert atmosphere in the absence of a brazing-flux at elevated temperature for a period long enough for melting and spreading of the aluminium clad layer and all layers exterior thereto;
(v) cooling the brazed assembly.

2. Method according to claim 1, wherein said aluminium clad layer (b) has discrete silicon-rich particles exposed at said outer surface thereof, and said layer comprising nickel is bonded to said silicon-rich particles and to the areas of said outer surface between said silicon-rich particles, so as to form a continuous layer on said outer surface.

3. Method according to claim 1 or 2, wherein said bonding layer (d) is applied by a direct zinc-plating treatment or a zincate treatment or a stannate treatment.

4. Method according to claim 3, wherein said bonding layer (d) is applied by an immersion zincate treatment or an immersion stannate treatment.

5. Method according to any one of claims 1 to 4, wherein said bonding layer (d) has a thickness of not more than 0.5 µm, preferably not more than 0.3 µm,

6. Method according to claim 5, wherein said bonding layer (d) has a thickness in the range of 20 to 150 nm.

7. Method according to any one of claims 1 to 6, whereby the layer (c) comprising nickel further comprises bismuth in a range of up to 5 % by weight

8. Method of manufacturing an assembly of components joined by brazing, comprising the steps of:-
(i) forming said components of which at least one is made from a multi-layered brazing sheet product, the multi-layered brazing sheet product comprising a core sheet (a) having on at least one surface of said core sheet an aluminium clad layer (b), the aluminium clad layer being made of an aluminium alloy comprising silicon in an amount in the range of 2 to 18% by weight, and a layer (c) on the outer surface of said aluminium clad layer, the layer (c) comprising nickel and further at least bismuth in a range of up to 5% by weight;
(ii) forming at least one other component of a metal dissimilar to the core sheet of the multi-layered brazing sheet product and selected from the group consisting of plated titanium, coated titanium, bronze, brass, plated stainless steel, coated stainless steel, low-carbon steel, plated low-carbon steel, coated low-carbon steel, high-strength steel, coated high-strength steel, and plated high-strength steel;
(iii) assembling the respective components into an assembly such that the layer (c) comprising nickel of the multi-layered brazing sheet faces in part or in whole the at least one other component of a metal dissimilar to the core sheet of the multi-layered brazing sheet product;
(iv) brazing the assembly under a vacuum or in an inert atmosphere in the absence of a brazing-flux at elevated temperature for a period long enough for melting and spreading of the aluminium clad layer and all layers exterior thereto;
(v) cooling the brazed assembly.

9. Method according to any one of claims 1 to 8, wherein said layer (c) comprising nickel, and preferably nickel and bismuth, is applied by electroplating.

10. Method according to any one of claims 1 to 8, wherein said layer (c) comprising nickel, and preferably nickel and bismuth, is applied by physical vapour depositing or thermal spraying.

11. Method according to any one of claims 1 to 10, wherein said layer (c) comprising nickel, further comprises bismuth in a range of up to 3% by weight, preferably up to 1% by weight, and more preferably in a range of 0.01 to 0.05% by weight.

12. Method according to any one of claims 1 to 11, wherein said layer (c) comprising nickel has a thickness of not more than 2.0 µm, preferably not more than 1.0 µm.

13. Method according to any one of claim 1 to 12, wherein said layer (c) comprising nickel is deposited by electroplating both nickel and bismuth using an aqueous bath comprising a nickel-ion concentration in the range of 10 to 100 g/l and a bismuth-ion concentration in the range of 0.01 to 10 g/1.

14. Method according to any one of claims 1 to 13, wherein the layer (c) comprising nickel is essentially lead-free.

15. Method according to any one of claims 1 to 14, wherein the core sheet (a) of the multi-layered brazing sheet product is of an aluminium alloy.

16. Method according to claim 15, wherein the core sheet (a) of the multi-layered brazing sheet product is of an aluminium alloy selected from the group consisting of AA3000, AA5000, and AA6000-series aluminium alloys.

## Patentansprüche

1. Verfahren zum Herstellen einer Anordnung aus Bestandteilen, die durch Hartlöten verbunden werden, die folgenden Schritte umfassend:
(i) Formen der Bestandteile, von denen zumindest einer aus einem mehrschichtigen Hartlötblechprodukt hergestellt ist, wobei das mehrschichtige Hartlötblechprodukt ein Kernblech (a), das auf zumindest einer Oberfläche des Kernbleches eine Aluminiumplattierschicht (b) aufweist, wobei die Aluminiumplattierschicht aus einer Aluminiumlegierung besteht, die Silizium in einer Menge in dem Bereich von 2 bis 18 Gew.-% enthält, eine Nickel enthaltende Schicht (c) auf der Außenfläche der Aluminiumplattierschicht und eine Zink oder Zinn enthaltende Schicht (d) als Verbindungsschicht zwischen der Außenfläche der Aluminiumplattierschicht und der Nickel enthaltenden Schicht umfasst;
(ii) Formen zumindest eines anderen Bestandteils aus einem Metall, das sich von dem Kernblech des mehrschichtigen Hartlötblechprodukts unterscheidet und aus der Gruppe bestehend aus Titan, plattiertem Titan, beschichtetem Titan, Bronze, Messing, rostfreiem Stahl, plattiertem rostfreiem Stahl, beschichtetem rostfreiem Stahl, Nickel, Nickellegierung, kohlenstoffarmem Stahl, plattiertem kohlenstoffarmem Stahl, beschichtetem kohlenstoffarmem Stahl, hochfestem Stahl, beschichtetem hochfestem Stahl und plattiertem hochfestem Stahl ausgewählt wurde;
(iii) Zusammensetzen der jeweiligen Bestandteile zu einer Anordnung, so dass die Nickel enthaltende Schicht (c) des mehrschichtigen Hartlötblechprodukts teilweise oder vollständig dem zumindest einen anderen Bestandteil aus einem Metall, das sich von dem Kernblech des mehrschichtigen Hartlötblechprodukts unterscheidet, gegenüberliegt;
(iv) Hartlöten der Anordnung unter einem Vakuum oder in einer inerten Atmosphäre ohne ein Hartlötflussmittel bei einer erhöhten Temperatur über einen ausreichend langen Zeitraum, um die Aluminiumplattierschicht und alle ihr gegenüber äußeren Schichten zu schmelzen und zu verteilen;
(v) Abkühlen der hartgelöteten Anordnung.

2. Verfahren nach Anspruch 1, wobei die Aluminiumplattierschicht (b) diskrete siliziumreiche Teilchen aufweist, die an der Außenfläche davon freiliegen, und die Nickel enthaltende Schicht mit den siliziumreichen Teilchen und den Bereichen der Außenfläche zwischen den siliziumreichen Teilchen verbunden ist, um eine kontinuierliche Schicht auf der Außenfläche auszubilden.

3. Verfahren nach Anspruch 1 oder 2, wobei die Verbindungsschicht (d) durch eine direkte Zinkplattierbehandlung oder eine Zinkatbehandlung oder eine Stannatbehandlung aufgetragen wird.

4. Verfahren nach Anspruch 3, wobei die Verbindungsschicht (d) durch eine Zinkattauchbehandlung oder eine Stannattauchbehandlung aufgetragen wird.

5. Verfahren nach einem der Ansprüche 1 bis 4, wobei die Verbindungsschicht (d) eine Dicke von nicht mehr als 0,5 µm, vorzugsweise nicht mehr als 0,3 µm, aufweist.

6. Verfahren nach Anspruch 5, wobei die Verbindungsschicht (d) eine Dicke in dem Bereich von 20 bis 150 nm aufweist.

7. Verfahren nach einem der Ansprüche 1 bis 6, wobei die Nickel enthaltende Schicht (c) des Weiteren Wismut in einem Bereich von bis zu 5 Gew.-% aufweist.

8. Verfahren zum Herstellen einer Anordnung aus Bestandteilen, die durch Hartlöten verbunden werden, die folgenden Schritte umfassend:
(i) Formen der Bestandteile, von denen zumindest einer aus einem mehrschichtigen Hartlötblechprodukt hergestellt ist, wobei das mehrschichtige Hartlötblechprodukt ein Kernblech (a), das auf zumindest einer Oberfläche des Kernbleches eine Aluminiumplattierschicht (b) aufweist, wobei die Aluminiumplattierschicht aus einer Aluminiumlegierung besteht, die Silizium in einer Menge in dem Bereich von 2 bis 18 Gew.-% enthält, und eine Schicht (c) auf der Außenfläche der Aluminiumplattierschicht umfasst, wobei die Schicht (c) Nickel und des Weiteren Wismut in einem Bereich von bis zu 5 Gew.-% enthält;
(ii) Formen zumindest eines anderen Bestandteils aus einem Metall, das sich von dem Kernblech des mehrschichtigen Hartlötblechprodukts unterscheidet und aus der Gruppe bestehend aus plattiertem Titan, beschichtetem Titan, Bronze, Messing, plattiertem rostfreiem Stahl, beschichtetem rostfreiem Stahl, kohlenstoffarmem Stahl, plattiertem kohlenstoffarmem Stahl, beschichtetem kohlenstoffarmem Stahl, hochfestem Stahl, beschichtetem hochfestem Stahl und plattiertem hochfestem Stahl ausgewählt wurde;
(iii) Zusammensetzen der jeweiligen Bestandteile zu einer Anordnung, so dass die Nickel enthaltende Schicht (c) des mehrschichtigen Hartlötblechprodukts teilweise oder vollständig dem zumindest einen anderen Bestandteil aus einem Metall, das sich von dem Kernblech des mehrschichtigen Hartlötblechprodukts unterscheidet, gegenüberliegt;
(iv) Hartlöten der Anordnung unter einem Vakuum oder in einer inerten Atmosphäre ohne ein Hartlötflussmittel bei einer erhöhten Temperatur über einen ausreichend langen Zeitraum, um die Aluminiumplattierschicht und alle ihr gegenüber äußeren Schichten zu schmelzen und zu verteilen;
(v) Abkühlen der hartgelöteten Anordnung.

9. Verfahren nach einem der Ansprüche 1 bis 8, wobei die Schicht (c), die Nickel, und vorzugsweise Nickel und Wismut, enthält, durch Elektroplattieren aufgebracht wird.

10. Verfahren nach einem der Ansprüche 1 bis 8, wobei die Schicht (c), die Nickel, und vorzugsweise Nickel und Wismut, enthält, durch physikalisches Vakuumaufdampfen oder thermisches Spritzen aufgetragen wird.

11. Verfahren nach einem der Ansprüche 1 bis 10, wobei die Nickel enthaltende Schicht (c) des Weiteren Wismut in einem Bereich von bis zu 3 Gew.-%, vorzugsweise bis zu 1 Gew.-% enthält, wobei ein Bereich von 0,01 bis 0,05 Gew.-% stärker zu bevorzugen ist.

12. Verfahren nach einem der Ansprüche 1 bis 11, wobei die Nickel enthaltende Schicht (c) eine Dicke von nicht mehr als 2,0 µm, vorzugsweise nicht mehr als 1,0 µm, aufweist.

13. Verfahren nach einem der Ansprüche 1 bis 12, wobei die Nickel enthaltende Schicht (c) durch Elektroplattieren sowohl von Nickel als auch von Wismut unter Verwendung eines wässrigen Bades, das eine Nickelionenkonzentration in dem Bereich von 10 bis 100 g/l und eine Wismutionenkonzentration in dem Bereich von 0,01 bis 10 g/l enthält, aufgebracht wird.

14. Verfahren nach einem der Ansprüche 1 bis 13, wobei die Nickel enthaltende Schicht (c) im Wesentlichen bleifrei ist.

15. Verfahren nach einem der Ansprüche 1 bis 14, wobei das Kernblech (a) des mehrschichtigen Hartlötblechprodukts aus einer Aluminiumlegierung ist.

16. Verfahren nach Anspruch 15, wobei das Kernblech (a) des mehrschichtigen Hartlötblechprodukts aus einer Aluminiumlegierung ist, die aus der Gruppe bestehend aus Aluminiumlegierungen der Serien AA3000, AA5000 und AA6000 ausgewählt wurde.

## Revendications

1. Procédé de fabrication d'un assemblage de composants réunis par brasage, comprenant les étapes consistant à :
(i) former lesdits composants dont l'un au moins est fabriqué à partir d'une feuille de brasage multi-couches, la feuille de brasage multi-couches comprenant une feuille centrale (a) possédant, sur au moins une surface de ladite feuille centrale, une couche de revêtement en aluminium (b), la couche de revêtement en aluminium étant réalisée en un alliage d'aluminium comprenant du silicium en une quantité située dans la gamme de 2 à 18% en poids, une couche (c) contenant du zinc sur la surface externe de ladite couche de revêtement en aluminium, et une couche (d) contenant du zinc ou de l'étain en tant que couche de liaison entre ladite surface externe de ladite couche de revêtement en aluminium et ladite couche contenant du nickel ;
(ii) former au moins un autre composant en un métal qui est dissemblable de la feuille centrale de la feuille de brasage multi-couches, et sélectionné à partir du groupe constitué de : titane, titane traité par électrodéposition, titane revêtu, bronze, laiton, acier inoxydable, acier inoxydable traité par électrodéposition, acier inoxydable revêtu, nickel, alliage de nickel, acier à faible teneur en carbone, acier à faible teneur en carbone traité par électrodéposition, acier à faible teneur en carbone revêtu, acier à haute résistance, acier à haute résistance revêtu et acier à haute résistance traité par électrodéposition ;
(iii) assembler les composants respectifs pour en faire un ensemble de sorte que la couche (c) contenant du nickel de la feuille de brasage multi-couches se trouve en face, en partie ou en totalité, de l'au moins un autre composant réalisé en un métal qui est dissemblable de la feuille centrale de la feuille de brasage multi-couches ;
(iv) braser l'ensemble sous vide ou dans une atmosphère inerte, en l'absence d'un décapant de brasage, à température élevée, pendant un intervalle de temps suffisamment long pour faire fondre et étaler la couche de revêtement en aluminium ainsi que toutes les couches situées à l'extérieur par rapport à celle-ci ;
(v) refroidir l'ensemble brasé.

2. Procédé, selon la revendication 1, dans lequel ladite couche de revêtement en aluminium (b) possède des particules discrètes riches en silicium qui sont exposées à ladite surface externe de celle-ci, et ladite couche contenant du nickel est liaisonnée auxdites particules riches en silicium et aux zones de ladite surface externe entre lesdites particules riches en silicium, de sorte à former une couche continue sur ladite surface externe.

3. Procédé, selon la revendication 1 ou 2, dans lequel ladite couche de liaison (d) est appliquée grâce à un traitement direct de zingage ou un traitement au zincate ou un traitement au stannate.

4. Procédé, selon la revendication 3, dans lequel ladite couche de liaison (d) est appliquée grâce à un traitement par immersion au zincate ou un traitement par immersion au stannate.

5. Procédé, selon l'une quelconque des revendications 1 à 4, dans lequel ladite couche de liaison (d) a une épaisseur qui n'est pas supérieure à 0,5 µm, de préférence qui n'est pas supérieure à 0,3 µm.

6. Procédé, selon la revendication 5, dans lequel ladite couche de liaison (d) a une épaisseur qui se situe dans la gamme de 20 à 150 nm.

7. Procédé, selon l'une quelconque des revendications 1 à 6, dans lequel la couche (c) contenant du nickel comprend en outre du bismuth dans une gamme allant jusqu'à 5% en poids.

8. Procédé de fabrication d'un assemblage de composants réunis par brasage, comprenant les étapes consistant à
(i) former lesdits composants dont l'un au moins est fabriqué à partir d'une feuille de brasage multi-couches, la feuille de brasage multi-couches comprenant une feuille centrale (a) possédant, sur au moins une surface de ladite feuille centrale, une couche de revêtement en aluminium (b), la couche de revêtement en aluminium étant réalisée en un alliage d'aluminium comprenant du silicium en une quantité située dans la gamme de 2 à 18% en poids, et une couche (c) sur la surface externe de ladite couche de revêtement en aluminium, la couche (c) contenant du zinc et en outre au moins du bismuth dans une gamme allant jusqu'à 5% en poids ;
(ii) former au moins un autre composant en un métal qui est dissemblable de la feuille centrale de la feuille de brasage multi-couches, et sélectionné à partir du groupe constitué de : titane traité par électrodéposition, titane revêtu, bronze, laiton, acier inoxydable traité par électrodéposition, acier inoxydable revêtu, acier à faible teneur en carbone, acier à faible teneur en carbone traité par électrodéposition, acier à faible teneur en carbone revêtu, acier à haute résistance, acier à haute résistance revêtu et acier à haute résistance traité par électrodéposition ;
(iii) assembler les composants respectifs pour en faire un ensemble de sorte que la couche (c) contenant du nickel de la feuille de brasage multi-couches se trouve en face, en partie ou en totalité, de l'au moins un autre composant réalisé en un métal qui est dissemblable de la feuille centrale de la feuille de brasage multi-couches ;
(iv) braser l'ensemble sous vide ou dans une atmosphère inerte, en l'absence d'un décapant de brasage, à température élevée, pendant un intervalle de temps suffisamment long pour faire fondre et étaler la couche de revêtement en aluminium ainsi que toutes les couches situées à l'extérieur par rapport à celle-ci ;
(v) refroidir l'ensemble brasé.

9. Procédé, selon l'une quelconque des revendications 1 à 8, dans lequel ladite couche (c) contenant du nickel, et de préférence du nickel et du bismuth, est appliquée par électrodéposition.

10. Procédé, selon l'une quelconque des revendications 1 à 8, dans lequel ladite couche (c) contenant du nickel, et de préférence du nickel et du bismuth, est appliquée par dépôt physique en phase vapeur ou par pulvérisation thermique.

11. Procédé, selon l'une quelconque des revendications 1 à 10, dans lequel ladite couche (c) contenant du nickel, comprend en outre du bismuth dans une gamme allant jusqu'à 3% en poids, de préférence jusqu'à 1% en poids, et de plus grande préférence dans une gamme de 0,01 à 0,05% en poids.

12. Procédé, selon l'une quelconque des revendications 1 à 11, dans lequel ladite couche (c) contenant du nickel a une épaisseur qui n'est pas supérieure à 2,0 µm, de préférence qui n'est pas supérieure à 1,0 µm.

13. Procédé, selon l'une quelconque des revendications 1 à 12, dans lequel ladite couche (c) contenant du nickel est déposée par électrodéposition à la fois du nickel et du bismuth au moyen d'un bain aqueux ayant une concentration d'ions Nickel comprise dans la gamme de 10 à 100 g/l et une concentration d'ions Bismuth comprise dans la gamme de 0,01 à 10 g/l.

14. Procédé, selon l'une quelconque des revendications 1 à 13, dans lequel la couche (c) contenant du nickel est sensiblement exempte de plomb.

15. Procédé, selon l'une quelconque des revendications 1 à 14, dans lequel la feuille centrale (a) de la feuille de brasage multi-couches est réalisée en un alliage d'aluminium.

16. Procédé, selon la revendication 15, dans lequel la feuille centrale (a) de la feuille de brasage multi-couches est réalisée en un alliage d'aluminium sélectionné à partir du groupe constitué des alliages d'aluminium des séries AA3000, AA5000 et AA6000.
